# EUROPEAN PATENT SPECIFICATION

(11) **EP 3 518 650 B1**
(45) Date of publication and mention of the grant of the patent: **20.04.2022**
(21) Application number: 17783688.9
(22) Date of filing: 29.09.2017
(51) Int. Cl.: A01G 3/08, B25F 3/00, B25F 5/02, B27B 17/00

(54) **SPLIT POWER TOOL**
TEILBARES ELEKTROWERKZEUG
OUTIL ÉLECTRIQUE DÉMONTABLE

(30) Priority: 29.09.2016 US 201662401556 P
(43) Date of publication of application: 07.08.2019
(73) Proprietor: MTD products Inc, Valley City, OH 44280 (US)
(72) Inventor: HARRIS, Breck, Chandler Arizona 85224 (US)
(74) Representative: Barker Brettell LLP
(86) International application number: PCT/US2017/054401
(87) International publication number: WO 2018/064526

(56) References cited:
- US-A1- 2011 162 219
- US-A1- 2016 227 694
- US-B2- 8 136 254

## Description

### CROSS-REFERENCE TO RELATED APPLICATIONS

This application claims priority to U.S. Provisional Patent Application Serial No. 62/401,556 filed September 29, 2016, and entitled SPLIT POWER TOOL.

### FIELD OF THE INVENTION

The present invention relates to an outdoor handheld power tool, and more particularly, to a split power tool. Such tools are known from US8136254B2, that shows the preamble of claim 1, or from US2011/162219A1.

### BACKGROUND OF THE INVENTION

Polesaws are commonly used in lawn maintenance to trim branches from trees at locations that cannot be reached with a typical chainsaw when an operator is standing on the ground. Typical polesaws include a handle end that is fixedly connected to a pole, and an electric chainsaw is either fixedly attached to releasably attached to the opposing end of the pole. Often, the chain bar of the chainsaw is aligned with the pole, which prevents an operator from being able to easily see the branch that is being cut. Also, the handle end typically includes only a single handle for trying to control the entire polesaw with a secondary handle either missing or located at an uncomfortable position on the pole.

### BRIEF SUMMARY OF THE INVENTION

In one aspect of the present invention, a split power tool is provided. The split power tool includes a handle end having a first handle portion and a second handle portion, said handle end having a first attachment assembly having a pair of electrical connectors being electrically connected to a power supply, said handle end further having a first longitudinal axis aligned with said first handle portion. A tool end having a housing, a motor located within the housing, and a cutting tool extending from said housing, said cutting tool being driven by said motor, said tool end having a second longitudinal axis aligned with said cutting tool, and said tool end having a second attachment assembly having a pair of electrical connectors. Said tool end is releasably attachable to said handle end such that when said tool end is positively attached to said handle end, said electrical connectors of said second attachment assembly are in contact with said electrical connectors of said first attachment assembly for electrically connecting said tool end and said handle end. Said first and second longitudinal axes are oriented parallel to each other and said first and second attachment assemblies are oriented at an angle with respect to said first and second longitudinal axes when said tool end is positively attached to said handle end.

In another aspect of the present invention, a split power tool is provided. The split power tool includes a handle end having a pair of graspable members and a guard portion. The split power tool also includes a tool end having a housing, a motor located within the housing, and a cutting tool extending from the housing. The tool end is releasably attachable to said handle end. One of said graspable members is aligned with the cutting tool when the tool end is attached to the handle end.

Advantages of the present invention will become more apparent to those skilled in the art from the following description of the embodiments of the invention which have been shown and described by way of illustration.

### BRIEF DESCRIPTION OF SEVERAL VIEWS OF THE DRAWINGS

These and other features of the present invention, and their advantages, are illustrated specifically in embodiments of the invention now to be described, by way of example, with reference to the accompanying diagrammatic drawings, in which:
FIG. 1A is an exemplary embodiment of a split power tool in a polesaw configuration;
FIG. 1B is an exploded view of the split power tool shown in FIG. 1A;
FIG. 2A is an exemplary embodiment of a split power tool in a chainsaw configuration;
FIG. 2B is a side view of the split power tool shown in FIG. 2A;
FIG. 2C is a top view of the split power tool shown in FIG. 2A;
FIG. 2D is an exploded view of the split power tool shown in FIG. 2A;
FIG. 2E is an exploded view of another embodiment of a split power tool in a chainsaw configuration;
FIG. 3A is an embodiment of a handle end of a split power tool;
FIG. 3B is another view of the handle end shown in FIG. 3A;
FIG. 3C is yet another view of the handle end shown in FIG. 3A;
FIG. 3D is a side view of the handle end shown in FIG. 3A;
FIG. 4A is a side view of an embodiment of a tool end of a split power tool;
FIG. 4B is an opposing side view of the tool end shown in FIG. 4A;
FIG. 4C is a rear view of the tool end shown in FIG. 4A;
FIG. 5 is a side view of an embodiment of a pole of a split power tool;
FIG. 6A is a magnified view of the attachment assemblies of a tool end and a pole;
FIG. 6B is another magnified view of the attachment assemblies of the tool end and pole shown in FIG. 6A;
FIG. 6C is a cross-sectional view of the attachment assemblies of the tool end and the handle end of the split power tool in a chainsaw configuration.

It should be noted that all the drawings are diagrammatic and not drawn to scale. Relative dimensions and proportions of parts of these figures have been shown exaggerated or reduced in size for the sake of clarity and convenience in the drawings. The same reference numbers are generally used to refer to corresponding or similar features in the different embodiments. Accordingly, the drawing(s) and description are to be regarded as illustrative in nature and not as restrictive.

### DETAILED DESCRIPTION OF THE PREFERRED EMBODIMENT

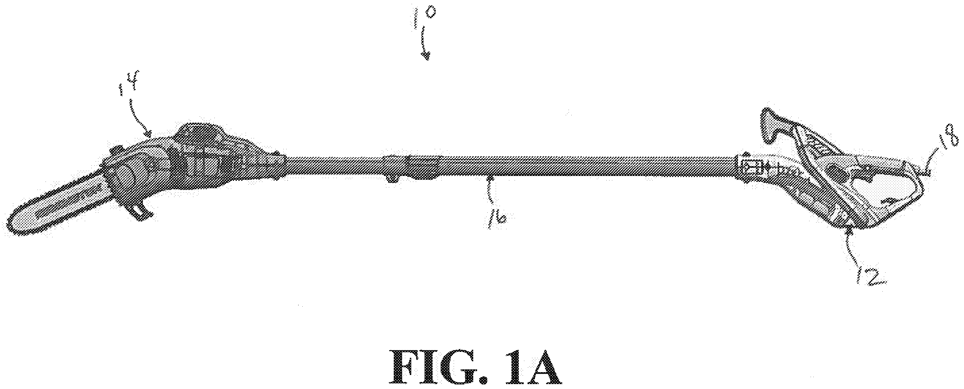

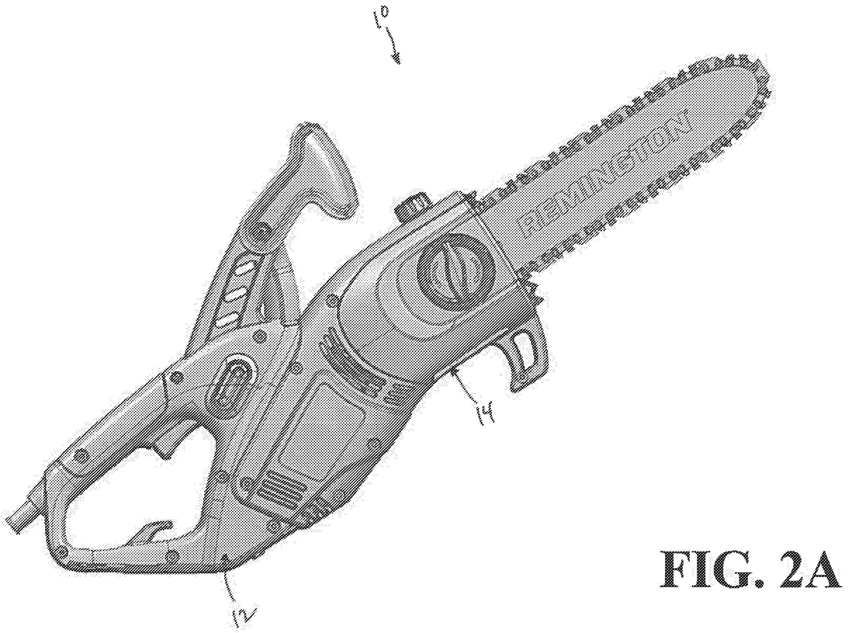

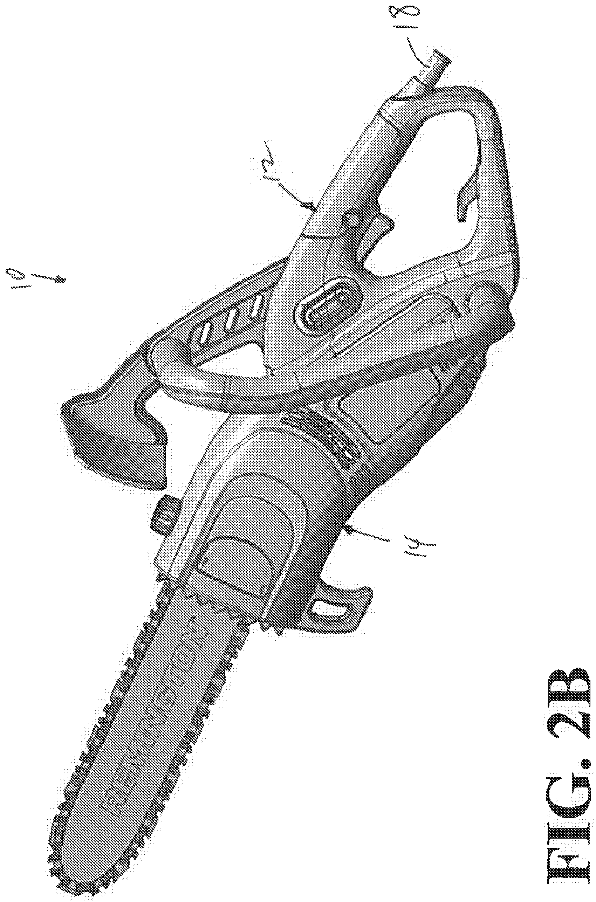

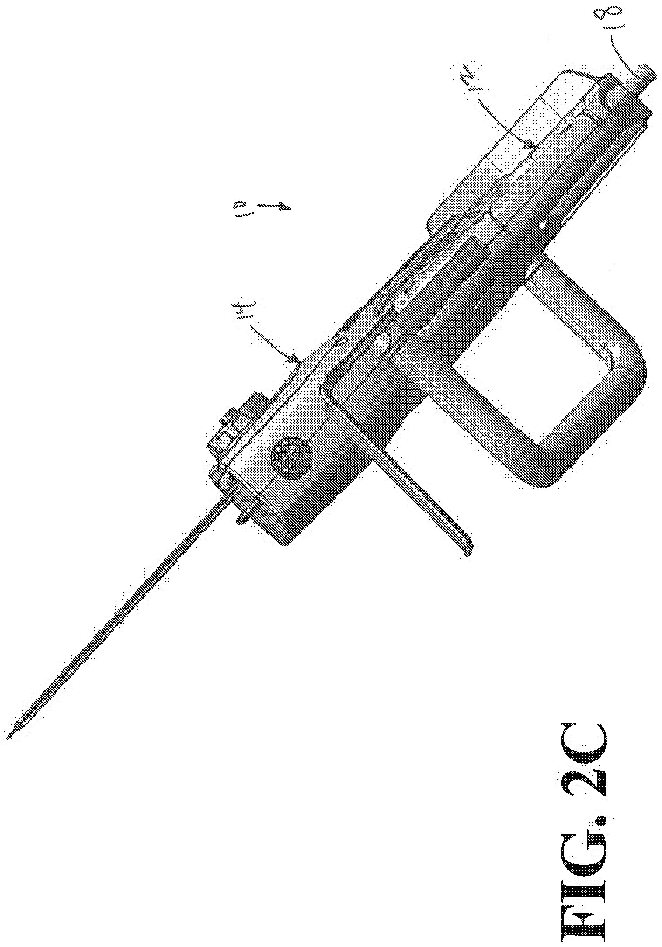

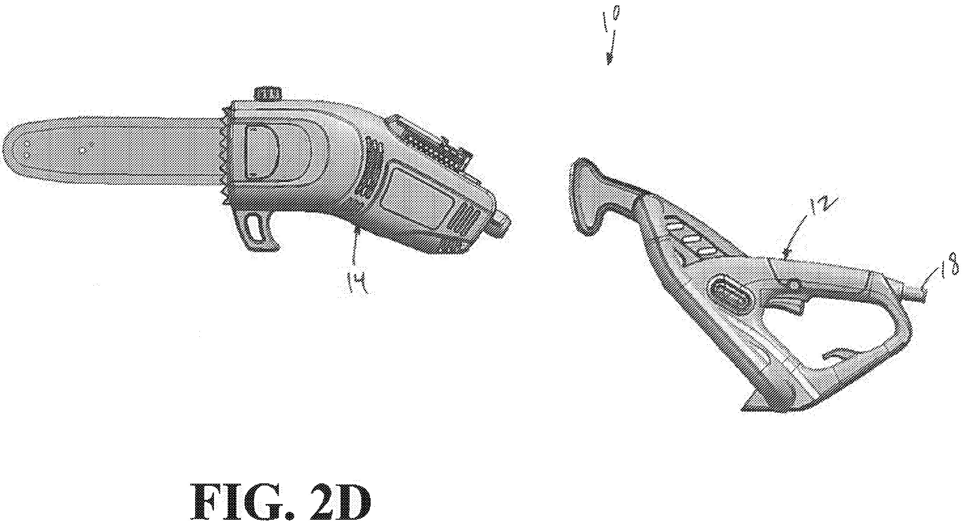

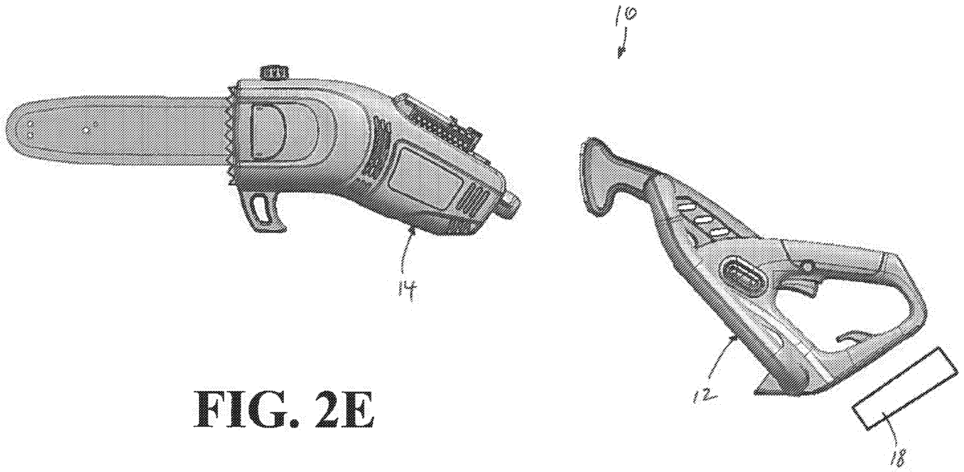

Referring to FIG. 1A-1B, an embodiment of a split power tool 10 is shown. In the illustrated embodiment, the split power tool 10 includes a handle end 12, a tool end 14, and a pole 16 releasably connectable to both the handle end 12 and the tool end 14. In the embodiment illustrated in FIGS. 1A-1B, the power supply 18 for the split power tool 10 is an electrical cord, which provides electrical power to the handle end 12. As shown in the embodiment illustrated in FIG. 2E, the power supply 18 for the split power tool 10 is a battery, which provides electrical power to the handle end 12. It should be understood by one having ordinary skill in the art that the power supply can be formed as an electrical cord providing A/C power, a replaceable battery, or a hybrid that includes both the electrical cord and battery which is switchable between the two types. In other embodiments, the split power tool 10 includes a handle end 12 and a tool end 14 releasably attached to each other, as shown in FIGS. 2A-2D.

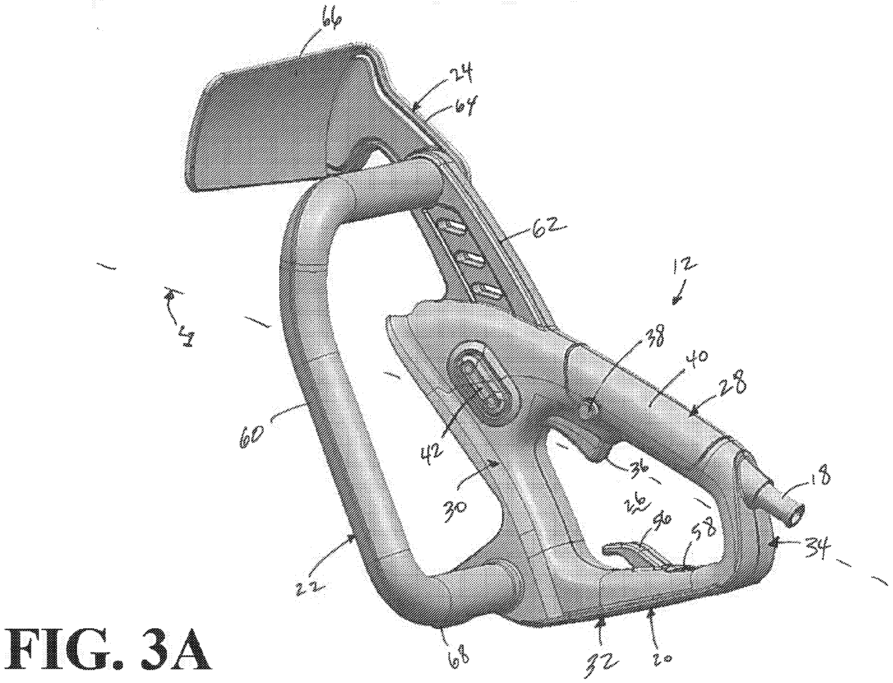

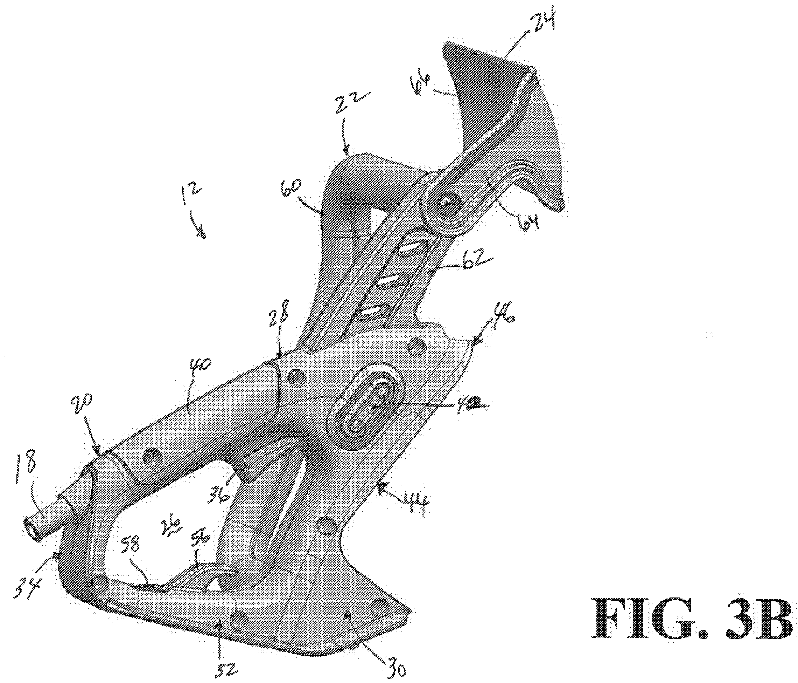

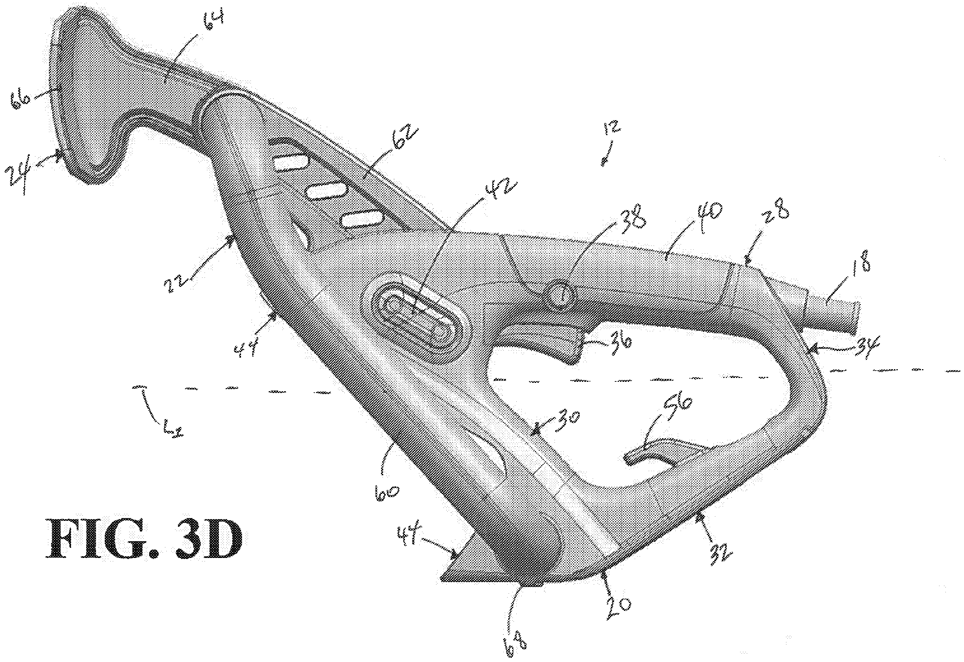

In an exemplary embodiment, the handle end 12 of the split power tool 10 is shown in FIGS. 3A-D. The handle end 12 is formed as a plurality of members attached to each other by way of mechanical fasteners such as screws or the like. The handle end 12 includes a first handle portion 20, a second handle portion 22, and a guard portion 24. The first handle portion 20 includes a hand opening 26, which is generally formed as a D-shaped aperture configured to allow an operator to insert their hand or a portion of their hand in order to grasp and secure the handle end 12. In the illustrated embodiment, the hand opening 26 is shown as being a fully-enclosed opening or aperture, but it should be understood by one having ordinary skill in the art that the hand opening 26 may alternatively be only partially enclosed. The first handle portion 20 of the handle end 12 includes an upper arm 28, a front vertical arm 30 extending from the upper arm 28, a lower arm 32 extending from the front vertical arm 30 opposite the upper arm 28, and a rear vertical arm 34 that extends between the lower arm 32 and the upper arm 28. Each of these arms is attached at each distal end to an adjacent arm to form the hand opening 26.

In an embodiment, the rear vertical arm 34 of the first handle portion 20 includes the power supply 18 operatively connected thereto, as shown in FIGS. 3A-3D. In another embodiment, the power supply 18 is operatively connected to the lower arm 32. In other embodiments, such as those powered by hybrid power (electrical cord and battery), the power supply 18 can be operatively connected to only the rear vertical arm 34, only the lower arm 32, or both the rear vertical arm 34 as well as the lower arm 32. It should be understood by one having ordinary skill in the art that the power supply 18 can be operatively connected to any portion of the handle end 12.

In the embodiment illustrated in FIGS. 3A-3D, the upper arm 28 extends forwardly from the upper end of the rear vertical arm 34 to the upper end of the front vertical arm 30. An actuatable trigger 36 extends from the bottom side of the upper arm 28. The trigger 36 is configured to allow the operator to control the operation of the split power tool 10. A trigger lock 38 is positioned on the side of the upper arm 28, adjacent to the trigger 36. In an embodiment, the trigger lock 38 is formed as a depressible button, but it should be understood by one having ordinary skill in the art that the trigger lock 38 can be formed as any safety device that can be easily actuated by the operator. The trigger lock 38 is a safety lock that requires the operator to depress the button in order to be able to actuate the trigger 36 to operate the split power tool 10. In an embodiment, the trigger lock 38 must be continually depressed or actuated during operation of the split power tool 10. In other embodiments, the trigger lock 38 is only required to be depressed during the initial start-up of the split power tool 10, but continual actuation of the trigger lock 38 during further operation is not needed. In the illustrated embodiment, the trigger lock 38 is positioned on the left side of the upper arm 28. It should be understood by one having ordinary skill in the art that the trigger lock 38 can alternatively be positioned on the right side of the upper arm 28, or a trigger lock 38 can be positioned on both opposing lateral sides of the upper arm 28. In further embodiments, the trigger lock 38 can be positioned anywhere on the upper arm 28, provided the trigger lock 38 is located in a position that is easily actuatable when the operator grasps the upper arm 28 of the handle end 12.

The upper arm 28 includes an ergonomically shaped and designed grip portion 40, as shown in FIGS. 3A-3D, which allows the operator to easily grasp the handle end 12 to control the operation and movement of the split power tool 10. The grip portion 40 is a graspable member. The grip portion 40 is shaped to provide a comfortable handle for gripping during extended operation of the split power tool 10. The grip portion 40 is generally aligned with the first longitudinal axis Li of the handle end 12, wherein the first longitudinal axis Li is a substantially horizontal axis defined when the handle end 12 is placed on a level surface. In an embodiment, the grip portion 40 is substantially parallel to the first longitudinal axis Li. In other embodiments, the grip portion 40 is oriented at an angle relative to the first longitudinal axis Li.

The front vertical arm 30 of the first handle portion 20 extends between the forward end of the upper arm 28 and the forward end of the lower arm 32, as shown in FIGS. 3A-3D. In an embodiment, the front vertical arm 30 includes a pair of depressible attachment buttons 42 positioned on opposing lateral sides of the front vertical arm 30. In other embodiments, only a single attachment button 42 is located on the front vertical arm 30. The attachment buttons 42 are configured to be depressible, wherein depression of at least one of the buttons 42 causes the attachment assembly of the handle end 12 - described in more detail below - to disengage from the corresponding attachment assembly of either the tool end 14 or the pole 16 that is removably attachable to the handle end 12. Releasing the attachment buttons 42 similarly causes the attachment or engagement of the corresponding attachment assemblies of the handle end 12 with the tool end 14 or the pole 16, provided there is proper alignment and positioning of the attachment assemblies. To secure attachment of the tool end 14 or the pole 16 to the handle end 12, the operator depresses the opposing attachment buttons 42, then slides the tool end 14 or pole 16 into alignment and engagement with the handle end 12. Once the tool end 14 or pole 16 is properly seated relative to the handle end 12, the operator releases the attachment buttons 42, which causes the internal latching mechanism of the handle end 12 to positively engage the tool end 14 or pole 16 in a locked position. To disengage the tool end 14 or pole 16 from the handle end 12, the operator again depresses the opposing attachment buttons 42, which causes the internal latching mechanism of the handle end 12 to disengage the tool end 14 or pole 16. Once disengaged, the tool end 14 or the pole 16 can then be slid and disconnected from the handle end 12.

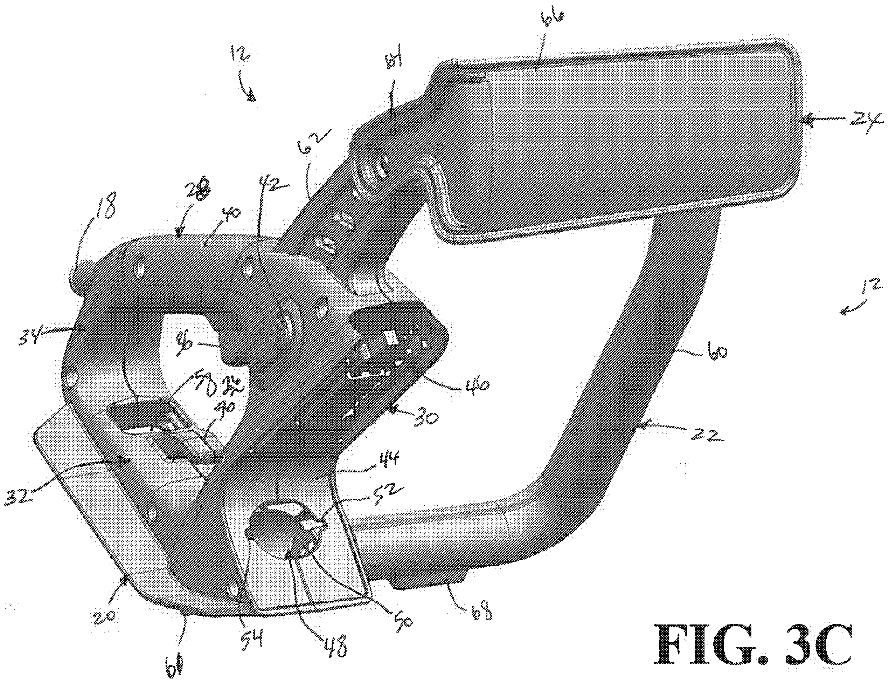

In an embodiment, the front vertical arm 30 of the first handle portion 20 of the handle end 12 further includes a forwardly-directed first engagement surface 44, as shown in FIG. 3C. The first engagement surface 44 is a generally L-shaped surface, wherein a first attachment assembly 46 is positioned on an upper portion of the first engagement surface 44 and a positioning aperture 48 is positioned on a lower portion of the first engagement surface 44. The first attachment assembly 46, as will be described in more detail below, is a sliding and locking mechanism that receives a corresponding attachment assembly on either the tool end 14 or pole 16 for releasably attaching these components. The positioning aperture 48 is configured to prevent rotation of the tool end 14 or the pole 16 relative to the handle end 12 when attached. In an embodiment, the first attachment assembly 46 and the positioning aperture 48 are both configured as female portions of male-female connections.

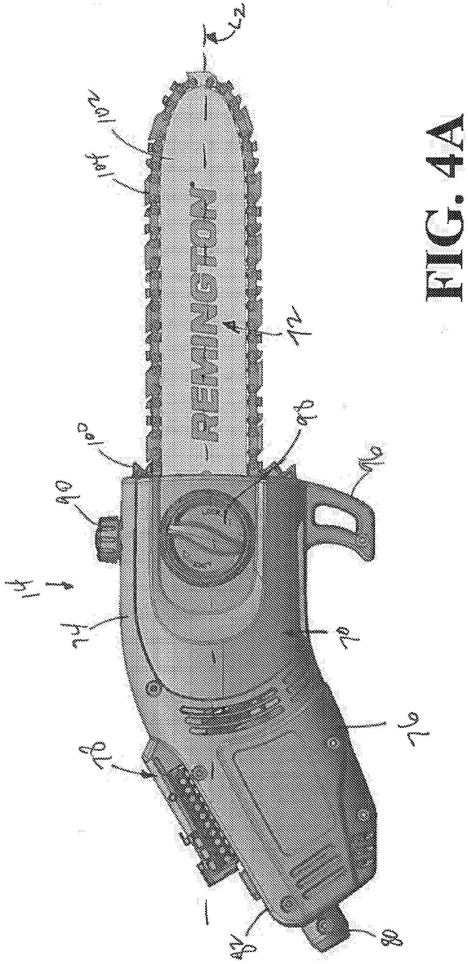

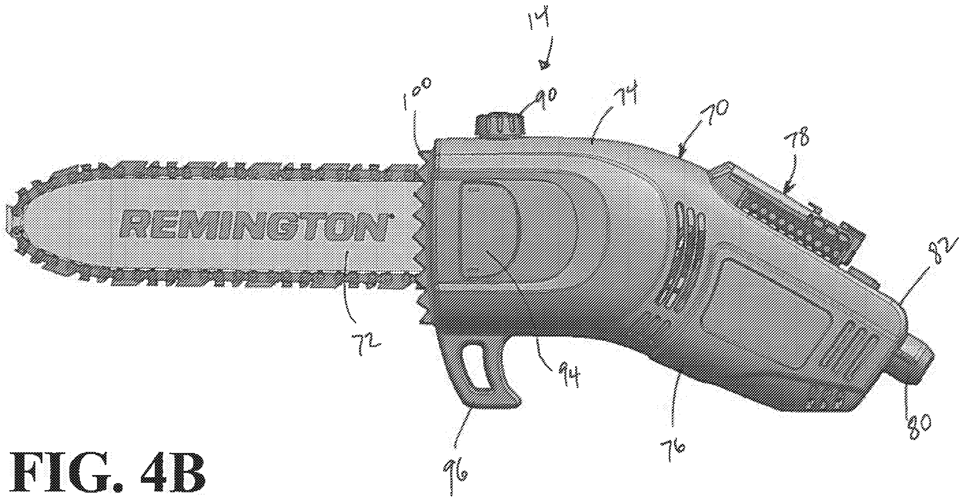

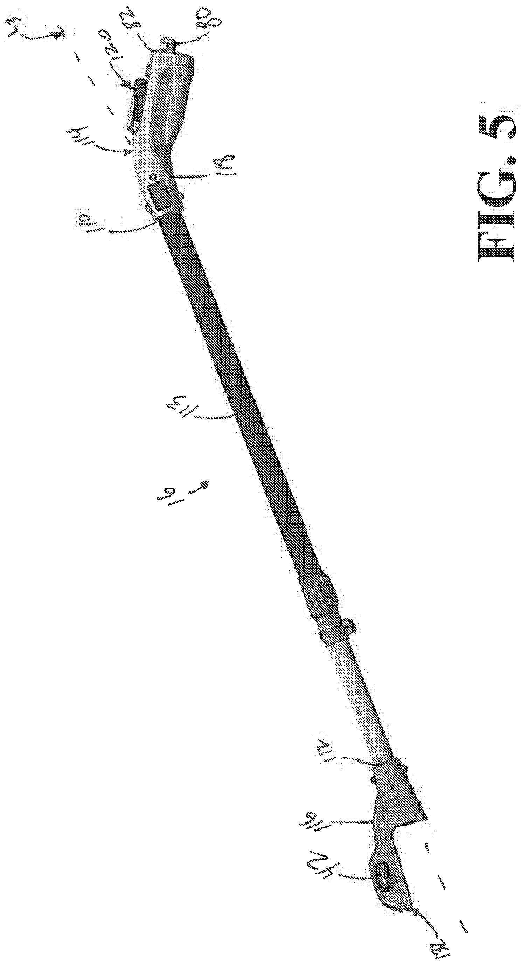

In the illustrated embodiment, the positioning aperture 48 is formed as an aperture through the first engagement surface 44 of the front vertical arm 30 of the first handle portion 20, as shown in FIG. 3C. The positioning aperture 48 is formed as a laterally-oriented oval opening 50 having a first lateral notch 52 and an opposing second lateral notch 54. It should be understood by one having ordinary skill in the art that the opening 50 can also be formed as a round, square, polygonal, or any other shaped opening. In an embodiment, the first and second lateral notches 52, 54 have the same size and shape and are positioned at diametrically opposite positions on the opening 50. In other embodiments, the first and second lateral notches 52, 54 form different sized notches that extend outwardly from the opening 50. In further embodiments, the first and second lateral notches 52, 54 are located at non-diametrically opposing positions about the opening 50. It should be understood by one having ordinary skill in the art that the positioning aperture 48 can include any number of lateral notches - or no lateral notches - that provide for proper alignment with the corresponding positioning knob 80. The positioning aperture 48 is configured to receive a corresponding positioning knob 80 extending from the tool end 14 (FIG. 4A) or the pole 16 (FIG. 5). It should be understood by one having ordinary skill in the art that first engagement surface 44 of the handle end 12 may include the positioning knob 80 that corresponds with a positioning aperture formed on the tool end 14 or the pole 16. Although there is no illustrated latching mechanism that cooperates with the positioning aperture 48, it should be understood by one having ordinary skill in the art that a releasable latching mechanism can be incorporated into the handle end 12 to cooperate with the positioning aperture 48 for providing a positive attachment between components.

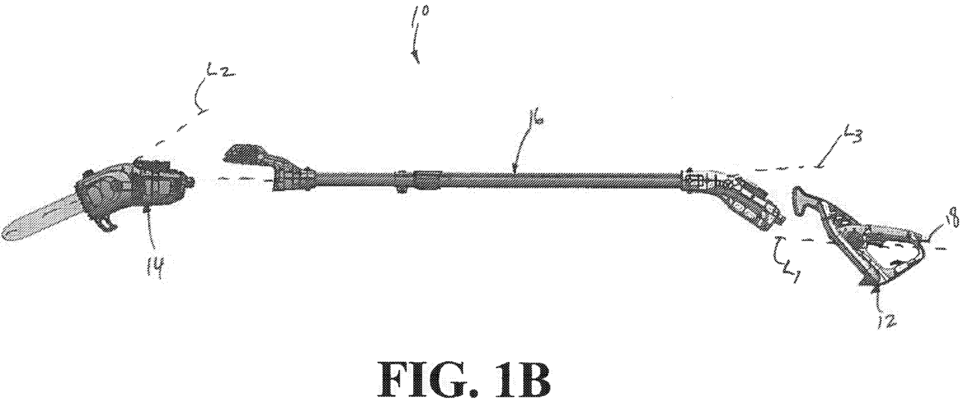

In an embodiment, the upper and lower portions of the first engagement surface 44 are oriented at an angle relative to each other, as shown in FIGS. 3C-3D. The upper and lower portions of the first engagement surface 44 are also orientated at an angle relative to the first longitudinal axis Li of the handle end 12. The first engagement surface 44 of the handle end 12 is L-shaped such that as the tool end 14 or pole 16 is slid onto the handle end 12 for attachment thereto, the sliding/cooperating surfaces of each component slide at an angle relative to the first longitudinal axis Li. Many prior art split power tools utilize a sliding and latching attachment mechanism, but the components typically slide in a generally vertical manner relative to each other. The angle of the first engagement surface 44 of the illustrated embodiment of the handle end 12 allows the first longitudinal axis Li of the handle end 12 to be substantially aligned with the second longitudinal axis L₂ of the tool end 14 when these components are attached together (FIG. 2A), and wherein the second longitudinal axis L₂ of the tool end 14 is oriented at an angle with respect to the first longitudinal axis Li of the handle end 12 when these components are connected to opposing ends of the pole 16 (FIG. 1B).

In an embodiment, the lower arm 32 of the first handle portion 20 extends between the lower end of the front vertical arm 30 and the lower end of the rear vertical arm 34, as shown in FIGS. 3A-3D. The lower arm 32 includes a hook 56 extending from the upper surface of the lower arm 32 into the hand opening 26. The hook 56 is directed forwardly toward the first engagement surface 44. The hook 56 is configured to receive a portion of an electrical power cord. A cord aperture 58 is formed through the thickness of the lower arm 32, wherein the cord aperture 58 is positioned adjacent to the hook 56. The cord aperture 58 is located rearward of the hook 56, between the hook 56 and the rear vertical arm 34. The cord aperture is configured to allow a loop of the electrical cord being wrapped around the hook 56 to be inserted through the cord aperture 58 from the bottom of the lower arm 32 and into the hand opening 26.

The lower arm 32 of the first handle portion 20 also includes a first balancing member 61 positioned on the bottom surface of the lower arm 32, as shown in FIG. 3C. The first balancing member 61 is formed as a protrusion that is laterally aligned in a transverse manner relative to the first longitudinal axis Li. The first balancing member 61 is configured to provide one of three balancing members that allow the split power tool 10 to be balanced when placed on a level surface. The first balancing member 61 cooperates with two other balancing members, as will be discussed below, to prevent the split power tool 10 from tipping over when placed on a level surface when not in use.

The handle end 12 further includes a second handle portion 22, as shown in FIGS. 3A-3C. The second handle portion 22 includes a grab bar 60 and a securing bar 62. The grab bar 60 is a graspable member. The securing bar 62 is an elongated member that extends upwardly and forward from the upper arm 28 of the first handle portion 20. In an embodiment, the securing bar 62 is integrally formed with the first handle portion 20. In another embodiment, the securing bar 62 is formed separately from the first handle portion 20 and then fixedly attached to the first handle portion 22. The grab bar 60 is a generally C-shaped member, wherein the lower end of the grab bar 60 is attached adjacent to the intersection of the lower arm 32 and the front vertical arm 30 of the first handle portion 20, and the upper end of the grab bar 60 is attached adjacent to the distal end of the securing bar 62 that extends away from the first handle portion 20. The grab bar 60 provides a second handle - in addition to the grip portion 40 of the upper arm 28 of the first handle portion 20 - that allows an operator to pick up and control the split power tool 10. The grip portion 40 and the grab bar 60 of the handle end 12 provides an operator with two graspable members which allows the operator to securely hold the split power tool 12 by grasping the handle end 12 with both hands. Having both graspable handle portions 20, 22 positioned on the handle end 12 provides a consistent grasping orientation for when the split power tool 10 is being used as a chainsaw (FIG. 2A) or when the split power tool 10 is being used as a polesaw (FIG. 1A). Both graspable handle portions 20, 22 positioned on the handle end 12 also eliminates the need for a secondary handle during the polesaw configuration.

In an embodiment, the grab bar 60 includes a second balancing member 68 positioned on the bottom surface of the lower lateral portion of the grab bar, as shown in FIG. 3A and 3C-3D. The second balancing member 68 is formed as a protrusion that is laterally aligned in a transverse manner relative to the first longitudinal axis Li. The second balancing member 68 is configured to provide one of three balancing members that allow the split power tool 10 to be balanced when placed on a level surface. The second balancing member 68 cooperates with the first balancing member 61 and the branch hook 96 (FIG. 4A) to prevent the split power tool 10 from tipping over when placed on a level surface when not in use.

In the illustrated embodiment, the guard portion 24 of the handle end 12, as shown in FIGS. 3A-3D, extends forward of the securing bar 62 of the second handle portion 22. The guard portion 24 is an L-shaped member, wherein the base 64 extends substantially parallel to the securing member 62 in a generally forward and upward direction. In an embodiment, the base 64 is formed separately from the securing member 62 and subsequently fixedly attached thereto. In another embodiment, the base 64 is rotatably attachable to the securing member 62, which allows the guard portion 24 to be adjusted by the operator to position the guard 66 between the operator's hand on the second handle portion 22 and the tool end 14 during operation. The guard 66 extends from the distal end of the base 64 in a substantially perpendicular manner such that the guard 66 is aligned generally parallel to the upper portion of the grasp bar 60. In an embodiment, the guard 66 is curved rearwardly to conform generally to an operator's hand as it holds the upper portion of the grasp bar 60.

Referring to FIGS. 4A-4C, an exemplary embodiment of the tool end 14 of the split power tool 10 is shown. The tool end 14 is releasably attachable to the handle end 12 as well as to a distal end of the pole 16. In an embodiment, the tool end 14 includes a housing 70, and electric motor (not shown) and associated gearing and components positioned within the housing 70, and a cutting saw 72 extending from the housing 70. The cutting saw 72 is powered by the electric motor within the housing 70. The housing 70 includes a forward portion 74 and a rear portion 76, wherein the forward and rear portions 76 are operatively connected to each other. In an embodiment, the forward and rear portions 74, 76 are formed together in a fixed relationship, wherein the forward and rear portions 74, 76 are oriented at an angle therebetween. In another embodiment, the forward portion 74 is rotatably connectable to the rear portion 76 such that the forward portion 74 can be selectively adjustable between about 0°-75° relative to the rear portion 76. The angle formed between the forward and rear portions 74, 76 of the housing 70 allows the tool end 14 to be easily disengaged from the handle end 12 in the chainsaw configuration without interference or contact with the guard portion 24 of the handle end 12.

In an embodiment, the rear portion 76 of the housing 70 of the tool end 14 includes a second engagement surface 82, as shown in FIGS. 4A-4C, wherein the shape of the second engagement surface 82 mirrors that shape of the first engagement surface 44 of the handle end 12. The first and second engagement surfaces 44, 82 are configured to be positioned immediately adjacent to each other, or abutting each other, when the tool end 14 is attached to the handle end 12. The second engagement surface 82 is generally L-shaped, wherein the upper portion of the second engagement surface 82 extends across the top of the rear portion 76 of the housing 70 and the rear portion of the second engagement surface 82 extends across the rear of the rear portion 76 of the housing 70. The upper and rear portions of the second engagement surface 82 are formed at an angle. In the illustrated embodiment, the upper and rear portions of the second engagement surface 82 are oriented substantially perpendicular to each other. In other embodiments, the upper and rear portions of the second engagement surface 82 are oriented at an angle between 0°-90°.

In an embodiment, a second attachment assembly 78 upwardly from the upper portion of the second engagement surface 82, as shown in FIGS. 4A-4C. The second attachment assembly 78 cooperates with the first attachment assembly 46 of the handle end 12 for releasably connecting the handle end 12 and the tool end 14 together for the chainsaw configuration. The positioning knob 80 extends from the rear portion of the second engagement surface 82. The positioning knob 80 is formed as a protrusion that extends from the housing 70. The positioning knob 80 is configured to be received within the positioning aperture 48 of the handle end 12 when the tool end 14 is attached thereto. The insertion of the positioning knob 80 within the positioning aperture 48 prevents movement of the tool end 14 relative to the handle end 12, thereby reducing the amount of stresses that are generated at the interconnection of the first and second attachment assemblies 46, 78 that would result during operation of the split power tool 10. In an embodiment, the positioning knob 80 is formed as a laterally-oriented body 84 having an oval-shaped cross-section with a first lateral fin 86 and an opposing second lateral fin 88. It should be understood by one having ordinary skill in the art that the body 84 of the positioning knob 80 can also be formed as a protrusion with a round, square, polygonal, or any other shaped cross-section. In an embodiment, the first and second lateral fins 86, 88 have the same size and shape and are positioned at diametrically opposite positions on the body 84. In other embodiments, the first and second lateral fins 86, 88 are formed as different sized members that extend outwardly from the body 84. In further embodiments, the first and second lateral fins 86, 88 are located at non-diametrically opposing positions about the body 84. It should be understood by one having ordinary skill in the art that the positioning knob 80 can include any number of lateral fins - or no lateral fins - that provide for proper alignment with the corresponding positioning aperture 48. In an embodiment, the second attachment assembly 78 and the positioning knob 80 are both formed as male portions of male-female connectors.

In an embodiment, the forward portion 74 of the housing 70 includes an oil cap 90 threadingly engaged to an upper surface of the housing 70, as shown in FIGS. 4A-4C. The oil cap 90 provides an inlet for the oil tank, which stores the oil used by the motor and corresponding components. The oil cap 90 extends in an upward direction away from the housing 70. The forward portion 74 of the housing 70 further includes an oil tank window 94 located on one of the lateral sides of the housing 70. In another embodiment, an oil tank window 94 is located on both opposing lateral sides of the housing 70. The oil tank window 94 allows an operator to view the amount of oil located within the oil tank within the housing 70. The oil tank window 94 includes an upper and lower mark for visually inspecting the relative amount of oil in the oil tank.

In an embodiment, the forward portion 74 of the housing 70 further includes a branch hook 96 extending downwardly from a lower surface of the forward portion 74, as shown in FIGS. 4A-4B. The branch hook 96 is a protrusion that is integrally formed with the forward portion 74 and includes a slight rearward curvature. The branch hook 96 allows the operator to move branches when the split power tool 10 is in the polesaw configuration. The branch hook 96 also cooperates with the first and second balancing members 61, 68 of the handle end 12 to provide three points of contact for supporting the split power tool 10 in the chainsaw configuration to prevent the chainsaw from tipping when placed on a level surface.

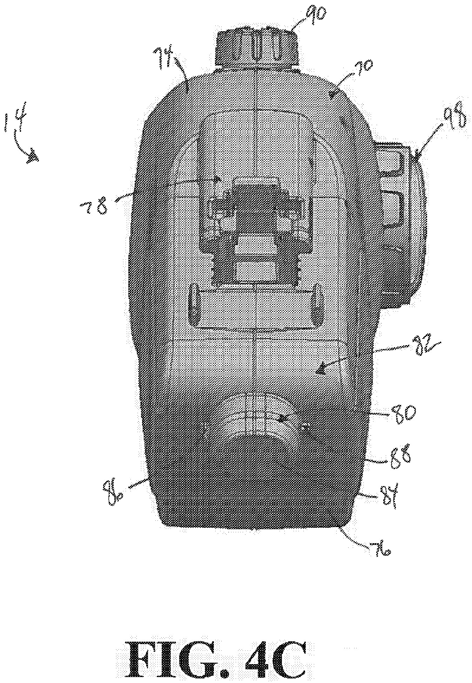

On the opposing lateral side of the forward portion 74 of the housing, a chain tensioning mechanism 98 is rotatably connected to the housing 70, as shown in FIGS. 4A and 4C. The chain tensioning mechanism 98 is configured to be rotated relative to the housing 70 in order to tighten the chain of the cutting saw 72, as will be explain in more detail below. The chain tensioning mechanism 98 includes a handle that can be used to easily rotate the chain tensioning mechanism 98.

In some embodiments, the tool end 14 further includes a bumper spike 100 extending forwardly from the housing 70, as shown in FIGS. 4A-4B. The bumper spike 100 is an elongated member extending forwardly from the housing 70, positioned adjacent to the cutting saw 72. The bumper spike 100 is formed as a plurality of triangular projections that are configured to contact and grip a piece of wood during cutting to provide rotational leverage for the operator.

The cutting saw 72 of the tool end 14 includes a chain bar 102 and a cutting chain 104, as shown in FIGS. 4A-4B. The chain bar 102 is an elongated member having a pair of substantially parallel edges connected by a rounded end. The chain bar 102 provides a guide about which the cutting chain 104 is disposed. The cutting chain 104 is configured to slide about the outer peripheral edge of the chain bar 102 during operation. The chain bar 102 is movable in a translational manner relative to the housing 70, wherein the relative longitudinal position of the chain bar 102 is adjusted by way of the chain tensioning mechanism 98. As the chain tensioning mechanism 98 is rotated in the clockwise direction, the chain bar 102 translates away from the housing 70 along the second longitudinal axis L₂. As a result, the translational movement of the chain bar 102 in the direction away from the housing 70 causes the cutting chain 104 to tighten, whereby the tension between adjacent saw teeth is increased. Extended use of the split power tool 10 tends to loosen the connection between saw teeth, which decreases the tension between the saw teeth. By increasing the tension in the cutting chain 104, the wear is reduced and likelihood that the cutting chain 104 becomes dislodged from the chain bar 102 is reduced. The chain bar 102 of the tool end 14 defines the second longitudinal axis L₂ of the tool end 14.

Referring to FIG. 5, an exemplary embodiment of a pole 16 is shown. The pole 16 is configured to be connected to both the handle end 12 and the tool end 14 to form a polesaw configuration. The pole 16 in an elongated member having a first distal end 110 and an opposing second distal end 112. The pole 16 further includes a hollow tube 113 extending between the first and second distal ends 110, 112. In an embodiment, the tube 113 has a fixed length. In another embodiment, the tube 113 has an adjustable length. A third longitudinal axis L₃ is defined by extending through the first and second distal ends 110, 112. A first adapter 114 is attached to the first distal end 110 and a second adapter 116 is attached to the second distal end 112 of the pole 16, wherein the first adapter 114 is configured to releasably connect the first distal end 110 to the handle end 12 and the second adapter 116 is configured to releasably connect the second distal end 112 to the tool end 14.

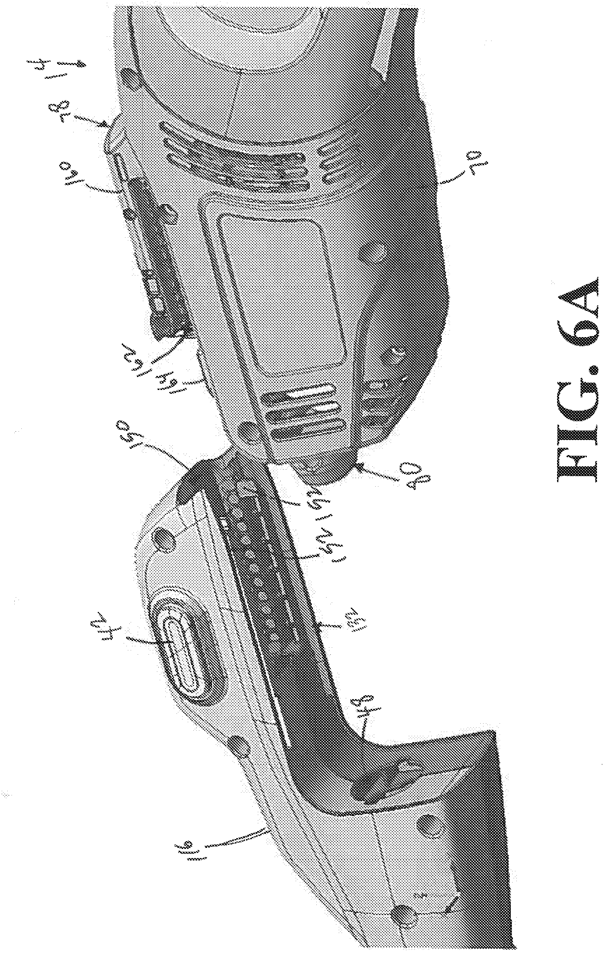

In an embodiment, the first adapter 114 is configured to be releasable engagement with the handle end 12, as shown in FIG. 5. The first adapter 114 includes a housing 118 that includes a curvature such that one of the housing 118 aligns with the first distal end 110 of the tube 113 and the opposing end of the housing 118 is angled downwardly relative to the tube 113. When the first adapter 114 of the pole 16 is attachable to the handle end 12, the first longitudinal axis Li of the handle end 12 is aligned in a substantially parallel or collinear manner relative to the third longitudinal axis L₃ of the pole 16. The first adapter 114 includes substantially the same connecting components as the tool end 14 described above. In particular, the first adapter 114 includes a housing 118 having a second engagement surface 82, wherein the second engagement surface 82 is curved. The second engagement surface 82 of the first adapter 114 is configured to contact and mirror the first engagement surface 44 of the handle end 12. A third attachment assembly 120 extends upwardly from the upper surface of the housing 118. The third attachment assembly 120 is configured to be received within the first attachment assembly 46 of the handle end 12. The third attachment assembly 120 is formed of the same components as the second attachment assembly 78 of the tool end 14. The first adapter 114 further includes a positioning knob 80 extending from the rear surface of the housing 118. The positioning knob 80 of the first adapter 114 is configured to be received within the positioning aperture 48 of the handle end 12. The third attachment assembly 120 of the first adapter 114 is configured the same and includes the same components as the second attachment assembly 78 of the tool end 14 discussed in more detail below and shown in FIGS.6A-6B.

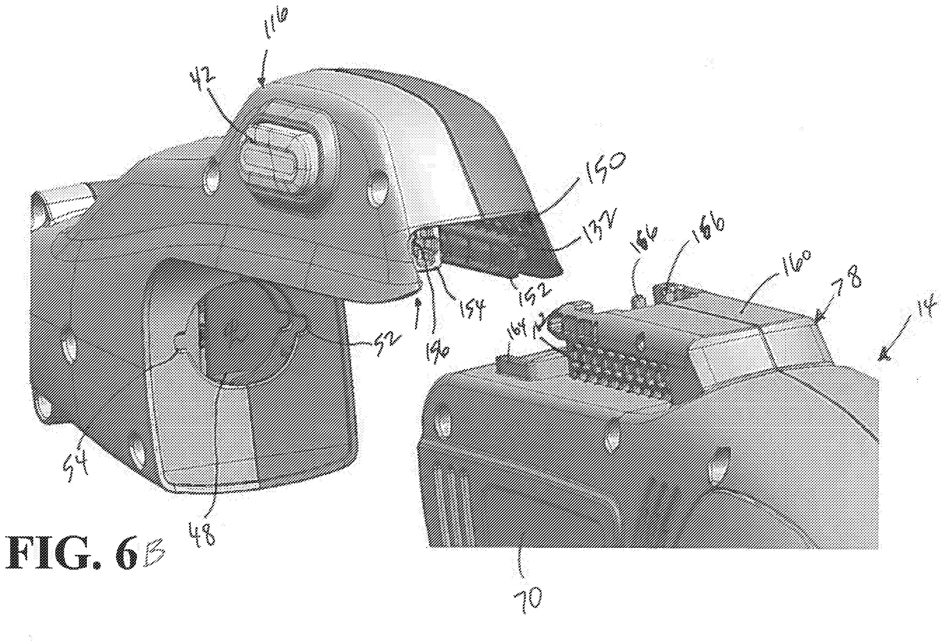

As shown in FIG. 5, the illustrated embodiment of the second adapter 116 is attached to the second distal end 112 of the tube 113. The second adapter 116 includes a housing 130, wherein the housing includes a fourth attachment assembly 132 that is formed of the same components as the first attachment assembly 46 of the handle end 12. The fourth attachment assembly 132 is configured as a female portion of a male-female connection. The housing 130 of the second adapter 116 further includes a first engagement surface 44 that mirrors and contacts the corresponding second engagement surface 82 of the tool end 14 when the tool end 14 is attached to the second adapter 116 of the pole 16. The second adapter 116 further includes a positioning aperture 48 that is sized and shaped like the positioning aperture 48 of the handle end 12. The second adapter 116 also includes a pair of attachment buttons 42 that are actuatable for releasably connecting the tool end 14 to the pole 16. The fourth attachment assembly 132 of the second adapter 116 located at the second distal end 112 of the tube 113, as shown in FIG. 6B, includes a pair of electrical connectors 156. These electrical connectors 156 are operatively and electrically connected to a pair of electrical connectors of the third attachment assembly 120 of the first adapter 114 attached to the first distal end 110 of the tube 113.

As shown in FIGS. 6A-6B, a tool end 14 is releasably attachable to the second adapter 116 of the pole 16. In order to securely attach the tool end 14 to the pole 16, the tool end 14 is moved in a generally translational direction such that the second attachment assembly 78 is received within the fourth attachment assembly 132 and the positioning knob 80 is received within the positioning aperture 48. During engagement, the attachment buttons 42 are depressed until the components are fully engaged, at which point the attachment buttons 42 are released such that the tool end 14 is positively attached to the pole 16. In the illustrated embodiment, the fourth attachment assembly 132 includes a recess 150 formed into the second adapter 116. The fourth attachment assembly 132 further includes a pair of opposing guide rails 152 located within the recess 150 and a first connecting boss 154 positioned adjacent to the ends of the guide rails 152 opposite the opening of the recess 150. The first connecting boss 154 includes a pair of electrical connectors 156 which are operatively and electrically connected to the power supply 18.

As shown in FIGS. 6A-6B, an embodiment of the second attachment assembly 78 is shown, wherein the second attachment assembly 78 includes a body 160 that extends upwardly from the housing 70 of the tool end 14. The body 160 includes a pair of opposing grooves 162 formed at the intersection between the body 160 and the housing 70. The grooves 162 of the second attachment assembly 78 are configured to receive the guide rails 152 of the fourth attachment assembly 132 of the pole 16. The second attachment assembly 78 also includes a pair of guidance tabs 164 that extend upwardly from the housing 70 and are rearward of the body 160. The guidance tabs 164 are configured to assist in guiding the second attachment assembly 78 into the fourth attachment assembly 132. The second attachment assembly 78 further includes a pair of electrical connectors 166 are positioned within the body 160 and are operatively and electrically connected to the motor that drives the cutting chain 104.

When the tool end 14 is slid into engagement with the second adapter 116 of the pole 16 while an operator actuates the attachment buttons 42, the grooves 162 in the body 160 of the second attachment assembly 78 receive the guide rails 152 of the fourth attachment assembly 132 as the body 160 slides into the recess 150. Simultaneously, the positioning knob 80 on the tool end 14 is inserted into the positioning aperture 48 of the second adapter 116 of the pole 16. The tool end 14 is slid in a translating movement until the second attachment assembly 78 is fully engaged with the fourth attachment assembly 78, at which point the attachment buttons 42 are released and the tool end 14 is positively connected to the pole 16. When the second attachment assembly 78 is fully engaged with the fourth attachment assembly 78, the electrical connectors 156 of the fourth attachment assembly 132 contact the electrical connectors 166 of the second attachment assembly 78 to provide an electrical connection between the pole 16 and the tool end 14. When the tool end 14 is positively attached to the pole 16, the second and third longitudinal axes L₂, L₃ are oriented at an angle therebetween while the second and fourth attachment assemblies 78, 132 are oriented at an angle relative to the second and third longitudinal axes L₂, L₃, respectively.

To disengage and remove the tool end 14 from the pole 16, the attachment buttons 42 are again actuated and the tool end 14 is pulled away from the pole 16, thereby disconnecting each of the components.

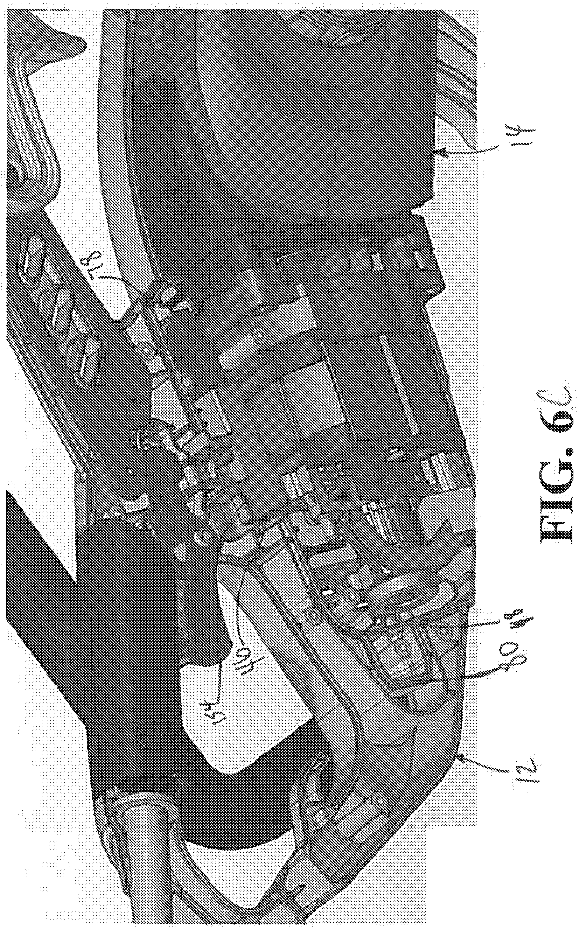

As shown in FIG. 6C, the tool end 14 is positively attached to the handle end such that the first attachment assembly 46 of the handle end 12 receives the second attachment assembly 78 of the tool end 14 while the positioning aperture 48 of the handle end 12 receives the positioning knob 80 of the tool end 14. The components of the first attachment assembly of the handle end 12 are the same as the components described above for the fourth attachment assembly 132 of the second adapter 116 of the pole 16. As such, the method of attaching the tool end 14 to the handle end 12 is the same as described above for attaching the tool end 14 to the pole 16. When the first attachment assembly 46 of the handle end is fully engaged with the second attachment assembly 78 of the tool end 14, the electrical connectors 156 of the first attachment assembly 46 contact the electrical connectors 166 of the second attachment assembly 78 of the tool end to provide an electrical connection between the handle end 12 and the tool end 14 and well as between the motor (not shown) of the tool end 14 and the power supply 18. When the tool end 14 is positively attached to the handle end 12, the first and second longitudinal axes L₁, L₂ are aligned while the second and fourth attachment assemblies 78, 132 are oriented at an angle relative to the first and second longitudinal axes L₁, L₂.

## Claims

1. A split power tool comprising:
a handle end (12) having a first handle portion (20), said handle end (12) having a first attachment assembly (46) having a pair of electrical connectors (156) being electrically connected to a power supply (18), said handle end (12) further having a first longitudinal axis (L₁) aligned with a grip portion (40) of said first handle portion (20); and
a tool end (14) having a housing (70), a motor located within the housing (70), and a cutting tool extending from said housing (70), said cutting tool being driven by said motor, said tool end (14) having a second longitudinal axis (L₂) aligned with said cutting tool, and said tool end (14) having a second attachment assembly (78) having a pair of electrical connectors (166);
wherein said tool end (14) is releasably attachable to said handle end (12) such that when said tool end (14) is attached to said handle end (12), said electrical connectors (166) of said second attachment assembly (78) are in contact with said electrical connectors (156) of said first attachment assembly (46) for electrically connecting said tool end (14) and said handle end (12); and
wherein said first and second longitudinal axes (L₁, L₂) are oriented parallel to each other and said first and second attachment assemblies (46, 78) are oriented at an angle with respect to said first and second longitudinal axes (L₁, L₂) when said tool end (14) is attached to said handle end (12);
**characterized in that** said handle end (12) is comprising a second handle portion (22), and wherein said housing (70) of said tool end (14) includes a forward portion (74) and a rear portion (76) integrally formed together, said forward portion (74) extending from said rear portion (76) at an angle thereto.

2. The split power tool of Claim 1, wherein said handle end includes a guard portion.

3. The split power tool of Claim 1, wherein said handle includes a grip portion and a grab bar for allowing an operator to grasp said handle end with both hands.

4. The split power tool of Claim 1, wherein said power supply is formed as an electrical cord for supplying A/C power or a rechargeable battery.

5. The split power tool of Claim 1,
wherein said handle end (12) includes a first engagement surface (44), said first engagement surface (44) including an upper portion and a lower portion oriented at an angle relative to said upper portion, said first attachment assembly (46) is positioned on said upper portion of said first engagement surface (44); and
wherein said tool end (14) includes a second engagement surface (82), said second engagement surface (82) including an upper portion and a lower portion oriented at an angle relative to said upper portion, said second attachment assembly (78) is positioned on said upper portion of said second engagement surface (82);
further comprising a positioning aperture (48) and a positioning knob (80), one of said positioning aperture (48) and positioning knob (80) being positioned on said lower portion of said first engagement surface (44), and the other of said positioning aperture (48) and positioning knob (80) being positioned on said lower portion of said second engagement surface (82);
wherein said first and second attachment assemblies (46, 78) engage with each other when said handle end (12) and said tool end (14) are connected to each other, and said positioning aperture (48) and positioning knob (80) engage with each other when said handle end (12) and said tool end (14) are connected to each other.

6. The split power tool of Claim 5, wherein said handle end includes said power supply, said power supply is formed as an electrical cord for supplying A/C power or a rechargeable battery.

7. The split power tool of Claim 5, wherein said handle end includes a trigger for controlling operation of said cutting tool.

## Patentansprüche

1. Teilbares Elektrowerkzeug, das Folgendes umfasst:
ein Griffende (12) mit einem ersten Griffabschnitt (20), wobei das Griffende (12) eine erste Befestigungsanordnung (46) mit einem Paar von elektrischen Verbindern (156) aufweist, die elektrisch mit einer Stromversorgung (18) verbunden sind, wobei das Griffende (12) ferner eine erste Längsachse (L₁) aufweist, die auf einen Greifabschnitt (40) des ersten Griffabschnitts (20) ausgerichtet ist; und
ein Werkzeugende (14) mit einem Gehäuse (70), einem Motor, der sich im Gehäuse (70) befindet, und einem Schneidwerkzeug, das sich vom Gehäuse (70) erstreckt, wobei das Schneidwerkzeug vom Motor angetrieben wird, wobei das Werkzeugende (14) eine zweite Längsachse (L₂) aufweist, die auf das Schneidwerkzeug ausgerichtet ist, und wobei das Werkzeugende (14) eine zweite Befestigungsanordnung (78) mit einem Paar von elektrischen Verbindern (166) aufweist;
wobei das Werkzeugende (14) lösbar am Griffende (12) befestigbar ist, derart, dass, wenn das Werkzeugende (14) am Griffende (12) befestigt ist, die elektrischen Verbinder (166) der zweiten Befestigungsanordnung (78) zum elektrischen Verbinden des Werkzeugendes (14) und des Griffendes (12) mit den elektrischen Verbindern (156) der ersten Befestigungsanordnung (46) in Kontakt sind; und
wobei die erste und die zweite Längsachse (L₁, L₂) parallel zueinander orientiert sind und die erste und die zweite Befestigungsanordnung (46, 78) mit Bezug auf die erste und die zweite Längsachse (L₁, L₂) in einem Winkel orientiert sind, wenn das Werkzeugende (14) am Griffende (12) befestigt ist;
**dadurch gekennzeichnet, dass** das Griffende (12) einen zweiten Griffabschnitt (22) umfasst und wobei das Gehäuse (70) des Werkzeugendes (14) einen vorderen Abschnitt (74) und einen hinteren Abschnitt (76) beinhaltet, die zusammen integral gebildet sind, wobei sich der vordere Abschnitt (74) vom hinteren Abschnitt (76) in einem Winkel dazu erstreckt.

2. Teilbares Elektrowerkzeug nach Anspruch 1, wobei das Griffende einen Schutzabschnitt beinhaltet.

3. Teilbares Elektrowerkzeug nach Anspruch 1, wobei der Griff einen Greifabschnitt und eine Haltestange, die es einem Bediener erlaubt, das Griffende mit beiden Händen zu fassen, beinhaltet.

4. Teilbares Elektrowerkzeug nach Anspruch 1, wobei die Stromversorgung als ein elektrisches Kabel zum Versorgen mit Wechselstrom oder eine aufladbare Batterie gebildet ist.

5. Teilbares Elektrowerkzeug nach Anspruch 1,
wobei das Griffende (12) eine erste Eingriffsfläche (44) beinhaltet, wobei die erste Eingriffsfläche (44) einen oberen Abschnitt und einen unteren Abschnitt, der mit Bezug auf den oberen Abschnitt in einem Winkel orientiert ist, beinhaltet, die erste Befestigungsanordnung (46) am oberen Abschnitt der ersten Eingriffsfläche (44) positioniert ist und
wobei das Werkzeugende (14) eine zweite Eingriffsfläche (82) beinhaltet, wobei die zweite Eingriffsfläche (82) einen oberen Abschnitt und einen unteren Abschnitt, der mit Bezug auf den oberen Abschnitt in einem Winkel orientiert ist, beinhaltet, die zweite Befestigungsanordnung (78) am oberen Abschnitt der zweiten Eingriffsfläche (82) positioniert ist;
das ferner eine Positionierungsöffnung (48) und einen Positionierungsknauf (80) umfasst, wobei eines der Positionierungsöffnung (48) und des Positionierungsknaufs (80) am unteren Abschnitt der ersten Eingriffsfläche (44) positioniert ist und das andere der Positionierungsöffnung (48) und des Positionierungsknaufs (80) am unteren Abschnitt der zweiten Eingriffsfläche (82) positioniert ist;
wobei die erste und die zweite Befestigungsanordnung (46, 78) ineinander eingreifen, wenn das Griffende (12) und das Werkzeugende (14) miteinander verbunden sind, und die Positionierungsöffnung (48) und der Positionierungsknauf (80) ineinander eingreifen, wenn das Griffende (12) und das Werkzeugende (14) miteinander verbunden sind.

6. Teilbares Elektrowerkzeug nach Anspruch 5, wobei das Griffende die Stromversorgung beinhaltet, die Stromversorgung als ein elektrisches Kabel zum Versorgen mit Wechselstrom oder eine aufladbare Batterie gebildet ist.

7. Teilbares Elektrowerkzeug nach Anspruch 5, wobei das Griffende einen Auslöser zum Steuern des Betriebs des Schneidwerkzeugs beinhaltet.

## Revendications

1. Outil électrique démontable comprenant :
une extrémité formant une poignée (12) ayant une première partie de poignée (20), ladite extrémité poignée (12) ayant un premier ensemble de fixation (46) ayant une paire de connecteurs électriques (156) connectés électriquement à une alimentation (18), ladite extrémité poignée (12) ayant en outre un premier axe longitudinal (L₁) aligné sur une partie de prise (40) de ladite première partie de poignée (20) ; et
une extrémité formant un outil (14) ayant un boîtier (70), un moteur situé à l'intérieur du boîtier (70), et un outil de coupe s'étendant depuis ledit boîtier (70), ledit outil de coupe étant entraîné par ledit moteur, ladite extrémité outil (14) ayant un second axe longitudinal (L₂) aligné sur ledit outil de coupe, et ladite extrémité outil (14) ayant un second ensemble de fixation (78) ayant une paire de connecteurs électriques (166) ;
dans lequel ladite extrémité outil (14) peut être fixée de façon amovible à ladite extrémité poignée (12) de sorte que lorsque ladite extrémité outil (14) est fixée à ladite extrémité poignée (12), lesdits connecteurs électriques (166) dudit second ensemble de fixation (78) sont en contact avec lesdits connecteurs électriques (156) dudit premier ensemble de fixation (46) pour la connexion électrique de ladite extrémité outil (14) et de ladite extrémité poignée (12) ; et
dans lequel lesdits premier et second axes longitudinaux (L₁, L₂) sont orientés parallèlement l'un à l'autre et lesdits premier et second ensembles de fixation (46, 78) sont orientés selon un angle par rapport auxdits premier et second axes longitudinaux (L₁, L₂) lorsque ladite extrémité outil (14) est fixée à ladite extrémité poignée (12) ;
**caractérisé en ce que** ladite extrémité poignée (12) comprend une seconde partie de poignée (22), et dans lequel ledit boîtier (70) de ladite extrémité outil (14) comprend une partie avant (74) et une partie arrière (76) formées d'un seul tenant, ladite partie avant (74) s'étendant à partir de ladite partie arrière (76) suivant un angle par rapport à celle-ci.

2. Outil électrique démontable selon la revendication 1, dans lequel ladite extrémité poignée comprend une partie de protection.

3. Outil électrique démontable selon la revendication 1, dans lequel ladite poignée comprend une partie de prise et une barre de saisie pour permettre à un opérateur de saisir ladite extrémité poignée des deux mains.

4. Outil électrique démontable selon la revendication 1, dans lequel ladite alimentation est sous forme d'un cordon électrique destiné à fournir une alimentation CA ou d'une batterie rechargeable.

5. Outil électrique démontable selon la revendication 1,
dans lequel ladite extrémité poignée (12) comprend une première surface de prise (44), ladite première surface de prise (44) comprenant une partie supérieure et une partie inférieure orientée suivant un angle par rapport à ladite partie supérieure, ledit premier ensemble de fixation (46) est positionné sur ladite partie supérieure de ladite première surface de prise (44) ; et
dans lequel ladite extrémité outil (14) comprend une seconde surface de prise (82), ladite seconde surface de prise (82) comprenant une partie supérieure et une partie inférieure orientée suivant un angle par rapport à ladite partie supérieure, ledit second ensemble de fixation (78) est positionné sur ladite partie supérieure de ladite seconde surface de prise (82) ;
comprenant en outre une ouverture de positionnement (48) et un bouton de positionnement (80), l'un de ladite ouverture de positionnement (48) et dudit bouton de positionnement (80) étant positionné sur ladite partie inférieure de ladite première surface de prise (44), et l'autre de ladite ouverture de positionnement (48) et dudit bouton de positionnement (80) étant positionné sur ladite partie inférieure de ladite seconde surface de prise (82) ;
dans lequel lesdits premier et second ensembles de fixation (46, 78) sont en prise l'un avec l'autre lorsque ladite extrémité poignée (12) et ladite extrémité outil (14) sont reliées l'une à l'autre, et ladite ouverture de positionnement (48) et ledit bouton de positionnement (80) sont en prise l'un avec l'autre lorsque ladite extrémité poignée (12) et ladite extrémité outil (14) sont reliées l'une à l'autre.

6. Outil électrique démontable selon la revendication 5, dans lequel ladite extrémité poignée comprend ladite alimentation, ladite alimentation est sous forme d'un cordon électrique destiné à fournir une alimentation CA ou d'une batterie rechargeable.

7. Outil électrique démontable selon la revendication 5, dans lequel ladite extrémité poignée comprend une gâchette destinée à commander le fonctionnement dudit outil de coupe.
